# FASCICULE DE BREVET EUROPEEN

(11) **EP 4 036 352 B1**
(45) Date de publication et mention de la délivrance du brevet: **02.08.2023**
(21) Numéro de dépôt: 22153265.8
(22) Date de dépôt: 25.01.2022
(51) Int. Cl.: E04H 6/00, B60L 53/50

(54) **DISPOSITIF DE STOCKAGE DE MOYENS DE TRANSPORT PERSONNEL PORTATIFS**
LAGERVORRICHTUNG FÜR PERSÖNLICHE TRAGBARE TRANSPORTMITTEL
DEVICE FOR STORING PORTABLE PERSONAL TRANSPORT MEANS

(30) Priorité: 28.01.2021 FR 2100826
(43) Date de publication de la demande: 03.08.2022
(73) Titulaire: Emmenecker, Kevin, 57050 Longeville les Metz (FR)
(72) Inventeur: Emmenecker, Kevin, 57050 Longeville les Metz (FR)
(74) Mandataire: Lecomte & Partners

(56) Documents cités:
- WO-A1-2016/179519
- WO-A1-2019/162607
- CN-A- 107 939 102
- CN-A- 111 546 920
- FR-A3- 3 079 728

## Description

### Domaine technique

L'invention a trait au domaine du mobilier urbain et de la mobilité des personnes en zones urbaines.

### Technique antérieure

Depuis quelques années, les moyens de transport personnel portatifs et leur usage ont connu un développement important. Il s'agit notamment des trottinettes électriques et des mono-roues. Ces moyens de transport personnel portatifs sont très avantageux en ce qu'ils procurent une mobilité adéquate à une vitesse raisonnable et dans des environnements urbains complexes mélangeant des parcours routiers et des parcours sur zones piétonnes. Le caractère portatif de ces moyens de transport, associé à leur taille réduite notamment par rapport à une bicyclette, permet de les ranger à divers endroits en principe non spécifiquement aménagés, comme notamment chez soi ou au lieu de travail.

Toutefois, lors de déplacement dans des lieux publics comme par exemple les administrations, bibliothèques, commerces, etc., le stockage de ces moyens de transport personnel pose problème. A cet effet, il est connu de prévoir du mobilier urbain avec des compartiments individuels de stockage pouvant par ailleurs être équipés de moyens de recharge électrique.

Le document de brevet publié FR 3 079 728 A1 divulgue un tel mobilier urbain équipé d'un circuit électrique de recharge et d'une interface interactive de location permettant à un utilisateur de réserver à distance un compartiment.

Le document de brevet publié DE 20 2019 104 516 U1 divulgue un mobilier urbain formant des compartiments individuels pour bicyclettes et tricycles, avec des moyens de recharge électrique.

Le document de brevet publié CN 209244345 U divulgue un mobilier urbain formant des compartiments individuels pour trottinettes, avec des moyens de recharge électrique.

Ces mobiliers urbains sont intéressants en ce qu'ils permettent le stockage sécurisé et la recharge de moyens de transport individuels tels que les trottinettes électriques, mono-roues et bicyclettes. Ils présentent toutefois l'inconvénient de présenter une intégration limitée, notamment dans des environnements naturels comme des parcs comportant des pelouses, haies et autres végétaux. En cas de dégradation, ils présentent des coûts de réparation importants dans la mesure où rien n'est prévu pour en faciliter l'entretien et la réparation. Aussi, leur modularité pour s'adapter aux différents formats de moyens de transport individuels portatifs, notamment en relation avec le coût de production, est limitée.

### Exposé de l'invention

L'invention a pour objectif de pallier au moins un des inconvénients de l'état de la technique susmentionné. Plus particulièrement, l'invention a pour objectif de proposer un dispositif pour le stockage de moyens de transport personnel portatifs, davantage adapté aux besoins actuels, plus particulièrement qui s'intègre davantage dans les environnements urbains et qui présente une plus grande modularité en qui concerne les différents formats des moyens de transport personnel portatifs.

L'invention a pour objet un dispositif pour le stockage de moyens de transport personnel portatifs, comprenant une enveloppe formant une pluralité de compartiments individuels de stockage desdits moyens de transport personnel portatifs, équipés chacun d'une porte d'accès au compartiment, apte à être sélectivement verrouillée et déverrouillée ; un circuit électrique de recharge des moyens de transport personnel portatifs ; remarquable en ce que les portes d'accès de la pluralité de compartiments individuels sont disposées sur une face avant et au moins une face latérale de l'enveloppe de manière à réserver au moins une portion de ladite face avant, adjacente à la face latérale, libre de porte d'accès et pourvue de moyens de fixation d'un habillage tel qu'un bardage ou un tapis végétal.

Selon un mode avantageux de l'invention, l'au moins une portion libre de la face avant de l'enveloppe forme une bande verticale s'étendant sur au moins 90% de la hauteur de la face principale.

Avantageusement, le circuit électrique de recharge des moyens de transport personnel portatifs comprend au moins un panneau photovoltaïque monté sur une face de l'enveloppe.

Selon un mode avantageux de l'invention, au moins un panneau photovoltaïque est monté sur une face supérieure de l'enveloppe, ladite face supérieure comprenant au moins une portion libre de panneau photovoltaïque et pourvue de moyens de fixation d'un habillage tel qu'un bardage ou un tapis végétal.

Selon un mode avantageux de l'invention, l'au moins une portion libre de la face supérieure de l'enveloppe forme une bande adjacente à la face latérale et alignée avec l'au moins une bande verticale sur la face avant.

Selon un mode avantageux de l'invention, au moins une face latérale comprend une portion libre de porte d'accès et pourvue de moyens de fixation d'un habillage tel qu'un bardage ou un tapis végétal.

Avantageusement, le dispositif comprend, en outre, un dispositif d'irrigation du ou des tapis végétaux, comprenant un réservoir à eau, une pompe et au moins une conduite d'amenée de l'eau de la pompe à l'au moins une portion libre de la face avant et/ou, le cas échéant, l'au moins une portion libre de la face supérieure.

Avantageusement, le dispositif d'irrigation comprend en bas de l'au moins une portion libre de la face avant et/ou, le cas échéant, de la face latérale, de l'enveloppe des moyens de collecte par gravité de l'eau d'irrigation.

Selon un mode avantageux de l'invention, les moyens de fixation du ou des habillages comprennent des moyens à vissage fixés sur la face avant et/ou, le cas échéant, sur la face supérieure.

Selon un mode avantageux de l'invention, une grille est fixée aux moyens de fixation du ou des habillages sur l'au moins une portion libre de la face avant et/ou, le cas échéant, de la face supérieure et de l'au moins une face latérale.

Selon un mode avantageux de l'invention, les compartiments individuels forment des modules assemblés les uns aux autres, de dimensions extérieures identiques. Selon un mode avantageux de l'invention, au moins un des modules comprend plusieurs compartiments superposés.

Selon un mode avantageux de l'invention, au moins un autre des modules comprend un seul compartiment de plus grande taille correspondant aux plusieurs compartiments superposés.

Avantageusement, le dispositif comprend un socle supportant les compartiments. Le socle présente avantageusement une épaisseur d'au moins 10cm, préférentiellement au moins 20cm, plus préférentiellement au moins 30cm. Le socle est avantageusement massif, par exemple en béton.

### Brève description des dessins

[Fig 1] est une vue en perspective d'un dispositif pour le stockage de moyens de transport personnel portatifs, conforme à l'invention;
[Fig 2] est une vue de côté d'un module du dispositif de la figure 1, illustrant la fixation et l'irrigation du tapis végétal ;
[Fig 3] est vue de côté du dispositif de la figure 1, illustrant le montage inclinable du panneau photovoltaïque et le circuit électrique.

### Description détaillée

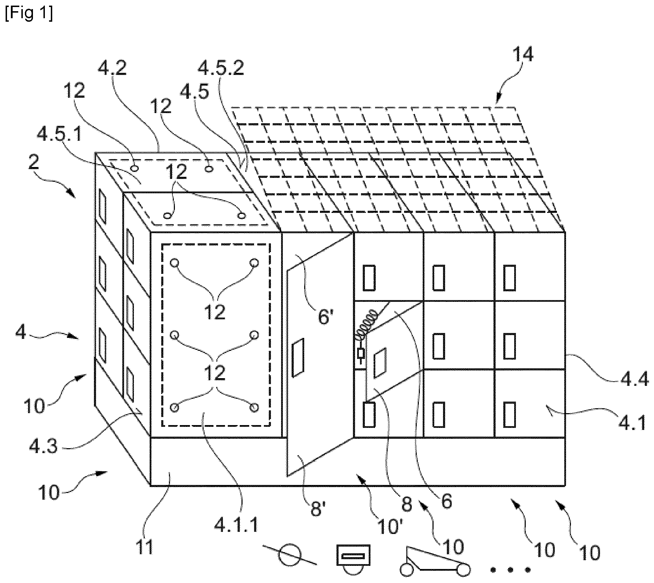

La figure 1 illustre en perspective un dispositif pour le stockage de moyens de transport personnel portatifs tels que des trottinettes électriques, mono-roues, etc.

Le dispositif 2 en question comprend une enveloppe 4, avantageusement parallélépipédique, présentant une face avant 4.1, une face arrière 4.2 opposée à la face avant 4.1, une première face latérale 4.3, une deuxième face latérale 4.4 opposée à la première face latérale 4.3, et une face supérieure 4.5. L'enveloppe 4 présente naturellement également une face inférieure posée sur le sol, cette n'étant toutefois pas détaillée compte tenu de sa fonctionnalité limitée.

Comme cela est visible, l'enveloppe 4 forme une série de compartiments 6 et 6' équipés chacun d'une porte 8 et 8', avantageusement individuelle, donnant accès au compartiment. Chacun des compartiments 6 est configuré pour recevoir un moyen de transport personnel portatif tels que ceux illustrés à la figure 1, à savoir une trottinette électrique, un mono-roue à effet gyroscopique (à placer entre le bas de jambes), un mono-roue du type planche (« skate » en anglais), etc. Certains compartiments 6' peuvent être de taille plus grande, pour recevoir un vélo ou bicyclette, notamment électrique. En particulier, le compartiment 6' de plus grande taille correspond à trois compartiments 6 superposés.

L'enveloppe 4 et les compartiments 6 et 6' sont avantageusement réalisés par des modules 10 et 10' assemblés les uns aux autres. En l'occurrence et à titre illustratifs uniquement, chaque module 10 comprend trois compartiments individuels 6 disposés verticalement les uns au-dessus des autres. Le module 10' comprend un seul compartiment individuel de plus grande taille 6' et par conséquent, une seule porte 8'. Dans la configuration de la figure 1, l'enveloppe 4 comprend six modules 10 et 10', dont un premier groupe de trois modules 10 (à droite) et un module 10' disposés côte-à-côte, et un deuxième groupe de deux modules 10 disposés côte-à-côte mais pivotés à 90°, avec leur face arrière contre une face latérale gauche au premier groupe. Cela signifie que parmi les compartiments individuels 6 et 6', certains sont disposés avec leurs portes d'accès 8 et 8' sur la face avant 4.1 de l'enveloppe 4 et d'autres sont disposés avec leurs portes d'accès 8 sur la première face latérale 4.3 de l'enveloppe. Il est entendu que l'emplacement du module 10' avec le compartiment de plus grande taille 6' peut différer de celui illustré à la figure 1. Le dispositif 2 peut par ailleurs ne comprendre aucun module du type du module 10', en comprendre davantage que un, ou encore ne comprendre que de tels modules.

De par cet agencement, la face avant 4.1 de l'enveloppe 4 présente une portion 4.1.1 adjacente à la première face latérale 4.3, libre de porte d'accès. Cette portion 4.1.1 correspond en l'occurrence à la face latérale du module correspondant du deuxième groupe de modules 10 pivotés à 90°. Cette portion 4.1.1 forme alors une bande verticale disponible pour y fixer un tapis végétal. A cet effet, elle comprend des moyens de fixation 12, tels que des écrous ou autres filetages femelles fixés à ou formés dans la paroi correspondante de l'enveloppe 4, en l'occurrence du module 10 correspondant.

Comme cela est visible à la figure 1, sur la face supérieure 4.5 de l'enveloppe 4 est avantageusement fixé au moins un panneau photovoltaïque 14. Ce dernier est avantageusement monté pivotant de manière à être inclinable. Il est toutefois également possible de monter le panneau photovoltaïque 14 à plat sur la face supérieure 4.5 en question. Le ou les panneaux photovoltaïque 14 occupent une portion 4.5.2 de la face supérieure 4.5 qui peut être la totalité de ladite face ou une fraction de celle-ci de manière à laisser une portion 4.5.1 libre.

Similairement, à la portion 4.1.1 de la face avant 4.1 de l'enveloppe 4, la portion 4.5.1 peut être destinée à recevoir un tapis végétal, auquel cas elle est avantageusement adjacente à la portion 4.1.1 de la face avant 4.1 de manière à former une bande continue de tapis végétal. A cet effet, la portion 4.5.1 de la face supérieure peut comprendre des moyens de fixation 12 similaires ou identiques à ceux sur la portion 4.1.1 de la face avant 4.1.

Il est entendu que la face arrière 4.2 et/ou la deuxième face latérale 4.4 de l'enveloppe 4 du dispositif 2, qui est libre de portes, peuvent également être destinées à recevoir un tapis végétal et comprendre des moyens de fixation 12 similaires ou identiques à ceux sur la portion 4.1.1 de la face avant 4.1.

Il est aussi entendu que des modules additionnels peuvent être disposés contre la face arrière 4.2 formée par le premier groupe de trois modules 10 (à droite) et du module 10' disposés côte-à-côte, de manière symétrique. De la sorte, le module peut présenter des compartiments sur les deux faces opposées 4.1 et 4.2. Il en va de même pour le deuxième groupe de deux modules 10 disposés côte-à-côte mais pivotés à 90°, avec leur face arrière contre une face latérale gauche au premier groupe. De la sorte, le module peut présenter des compartiments sur les deux faces opposées 4.3 et 4.4.

Encore en référence à la figure 1, on peut constater l'intérêt de l'agencement des compartiments individuels 6 et 6', plus particulièrement des modules 10 et 10', à savoir du deuxième groupe (correspondant aux deux modules de gauche) pivoté à 90° de sorte à présenter des portes d'accès 8 sur la première face latérale 4.3 et former la portion 4.1.1 de la face avant 4.1 qui est alors libre de porte d'accès et disponible pour y fixer un tapis végétal. La présence d'un tel tapis permet de réaliser une meilleure intégration dans un environnement urbain. Il est effet courant dans les milieux urbains, notamment sur les voies piétonnes, de prévoir des bacs avec de la végétation. Or la mise en place d'un dispositif de stockage de moyens de transport personnel portatifs tel que celui représenté à la figure 1 nécessite de la place souvent déjà occupée par de tels bacs végétaux. Le ou les tapis végétaux intégrés dans le dispositif selon la présente invention permettent ainsi de compenser l'enlèvement de tels bacs pour y placer le dispositif.

Toujours en référence à la figure 1, un socle 11 peut être prévu sous les modules 10 et 10'. Un tel socle permet de surélever les compartiments 6 et 6' par rapport au sol, évitant ainsi qu'ils soient en contact avec de l'eau de pluie pouvant stagner sur le sol. Le socle peut présenter une massivité importante de manière à éviter ou du moins limiter tout déplacement involontaire du dispositif 2. Le socle peut présenter une hauteur d'au moins 10cm, préférentiellement au moins 20cm, plus préférentiellement au moins au moins 30cm. Le socle 11 peut être massif, notamment en béton. Le socle 11 est avantageusement massif au point de former une barrière résistant à des attaques de véhicule bélier.

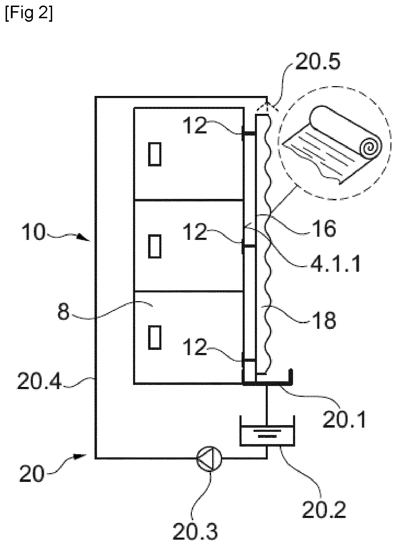

La figure 2 est une vue de côté du module 10 du dispositif de la figure 1, comportant la portion 4.1.1 de la face avant 4.1. La figure 2 illustre la fixation et l'irrigation du tapis végétal.

On peut en effet observer que la présence d'une grille 16 arrimée aux moyens de fixation 13 sur la portion 4.1.1 de la face avant 4.1 (figure 1). La grille 16 supporte le tapis végétal 18, en l'occurrence à distance de ladite portion 4.1.1 de face avant. Un système d'irrigation automatique 20 peut être prévu. Un tel système 20 peut comprendre un bac de récupération d'eau 20.1 disposé en dessous, à la verticale, du tapis végétal 18, un réservoir d'eau 20.2, une pompe 20.3, une conduite 20.4 et une buse d'irrigation 20.5. Le réservoir d'eau 20.2 est relié hydrauliquement au bac de récupération de manière recevoir par gravité l'eau de récupération. La pompe 20.3 comprend une entrée d'eau reliée hydrauliquement au réservoir d'eau 20.2 et une sortie d'eau reliée hydrauliquement, via la conduite 20.4, à la buse d'irrigation 20.5. Des moyens de contrôle et/ou régulation de l'eau d'irrigation peuvent être prévus. Il peut notamment s'agir de moyens de détection de l'humidité présente dans le tapis végétal 18 et de moyens de commande de la pompe 20.3. Des moyens de contrôle d'apport d'eau vers le réservoir d'eau 20.2, destinés à compenser les pertes par évaporation et absorption par le tapis végétal 18, peuvent être prévus.

Le système d'irrigation automatique 20 peut être du type à percolation, à savoir que l'eau d'irrigation est amenée en début continu mais faible, sans buse d'irrigation mais plutôt via des orifices de percolation répartis sur l'étendue du tapis végétal, avec éventuellement une concentration sur la partie supérieure dudit tapis végétal.

Le tapis végétal peut être du type en rouleau, tel qu'illustré à la figure 2. Une fois déroulé, il peut être fixé à la grille au moyen de broches et/ou clips de fixation.

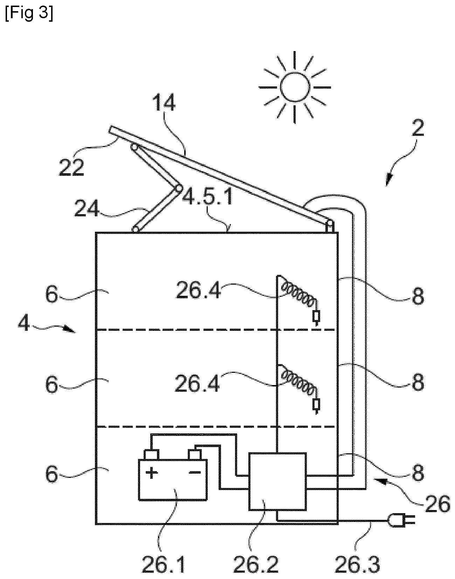

La figure 3 est vue de côté du dispositif de la figure 1, illustrant le montage inclinable du panneau photovoltaïque et le circuit électrique.

Le panneau photovoltaïque 14 est disposé sur un support 22 généralement plan et articulé sur l'enveloppe 4 du dispositif 2. Un bras de réglage 24 relie mécaniquement le support 22 à l'enveloppe 4 de manière à en fixer sa position, et de ce manière réglable. En fonction de l'emplacement et de l'orientation du dispositif 2, la panneau photovoltaïque 14 pourra être incliné de manière optimale grâce au bras de réglage 24.

Le circuit électrique 26 comprend, outre le panneau photovoltaïque 14, une batterie d'accumulateurs électriques 26.1, une unité de contrôle 26.2, un cordon 26.3 de raccordement au réseau de distribution électrique et des fiches 26.4 de branchement aux moyens de transport personnel portatifs tels que des trottinettes électriques, mono-roues, etc. En l'occurrence, la batterie d'accumulateurs électriques 26.1 et l'unité de contrôle 26.2 sont disposées dans un compartiment 6, rendant alors celui-ci indisponible pour recevoir un moyen de transport personnel portatif. La batterie d'accumulateurs électriques 26.1 est optionnelle, en particulier lorsqu'un branchement à un réseau de distribution électrique est possible. L'énergie électrique produite par le panneau photovoltaïque peut alors être consommée directement par la recharge des moyens de transport personnel portatifs disposés dans les compartiments et/ou injectée dans le réseau de distribution électrique.

## Revendications

1. Dispositif (2) pour le stockage de moyens de transport personnel portatifs, comprenant :
- une enveloppe (4) formant une pluralité de compartiments individuels (6) de stockage desdits moyens de transport personnel portatifs, équipés chacun d'une porte d'accès (8) au compartiment, apte à être sélectivement verrouillée et déverrouillée ;
- un circuit électrique (14, 26) de recharge des moyens de transport personnel portatifs;
**caractérisé en ce que**
les portes d'accès (8) de la pluralité de compartiments individuels (6) sont disposées sur une face avant (4.1) et au moins une face latérale (4.3) de l'enveloppe (4) de manière à réserver au moins une portion (4.1.1) de ladite face avant (4.1.1), adjacente à la face latérale (4.3), libre de porte d'accès et pourvue de moyens de fixation (12) d'un habillage tel qu'un bardage ou un tapis végétal (18).

2. Dispositif (2) selon la revendication 1, dans lequel l'au moins une portion libre (4.1.1) de la face avant (4.1) de l'enveloppe (4) forme une bande verticale s'étendant sur au moins 90% de la hauteur de la face principale (4.1).

3. Dispositif (2) selon l'une des revendications 1 et 2, dans lequel au moins un panneau photovoltaïque (14) est monté sur une face supérieure (4.5) de l'enveloppe (4), ladite face supérieure comprenant au moins une portion libre de panneau photovoltaïque (4.5.1) et pourvue de moyens de fixation (12) d'un habillage tel qu'un bardage ou un tapis végétal (18).

4. Dispositif (2) selon les revendications 2 et 3, dans lequel l'au moins une portion libre (4.5.1) de la face supérieure (4.5) de l'enveloppe (4) forme une bande adjacente à la face latérale (4.3) et alignée avec l'au moins une bande verticale (4.1.1) sur la face avant (4.1).

5. Dispositif (2) selon l'une des revendications 1 à 4, dans lequel au moins une face latérale comprend une portion libre de porte d'accès et pourvue de moyens de fixation d'un habillage tel qu'un bardage ou un tapis végétal.

6. Dispositif (2) selon l'une des revendications 1 à 5, dans lequel les moyens de fixation (12) du ou des habillages (18) comprennent des moyens à vissage fixé sur la face avant (4.1) et/ou, le cas échéant, sur la face supérieure (4.5).

7. Dispositif (2) selon l'une des revendications 1 à 6, dans lequel une grille (16) est fixée aux moyens de fixation (12) du ou des habillages (18) sur l'au moins une portion libre (4.1.1, 4.5.1) de la face avant (4.1) et/ou, le cas échéant, de la face supérieure (4.5) et de l'au moins une face latérale.

8. Dispositif (2) selon l'une des revendications 1 à 7, dans lequel
les compartiments individuels (6) forment des modules (10) assemblés les uns aux autres.

9. Dispositif (2) selon la revendication 8, dans lequel au moins un (10) des modules (10, 10') comprend plusieurs compartiments superposés (6).

10. Dispositif (2) selon la revendication 9, dans lequel au moins un autre (10') des modules (10, 10') comprend un seul compartiment (6') de plus grande taille correspondant aux plusieurs compartiments superposés (6).

## Patentansprüche

1. Eine Vorrichtung (2) zum Aufbewahren von tragbaren Personentransportmitteln, die Folgendes umfasst:
- eine Hülle (4), die eine Vielzahl von einzelnen Fächern (6) zur Aufbewahrung der tragbaren Personentransportmittel bildet, wobei jedes Fach mit einer Zugangstür (8) ausgestattet ist, die selektiv ver- und entriegelt werden kann;
- eine elektrische Schaltung (14, 26) zum Aufladen der tragbaren Personentransportmittel;
**dadurch gekennzeichnet, dass**
die Zugangstüren (8) der mehreren einzelnen Fächer (6) auf einer Vorderseite (4.1) und mindestens einer Seitenfläche (4.3) der Hülle (4) so angeordnet sind, dass mindestens ein Teil (4.1.1) der Vorderseite (4.1.1), der an die Seitenfläche (4.3) angrenzt, frei von Zugangstüren bleibt, und mit Befestigungsmitteln (12) versehen sind, die die Anbringung einer Abdeckung wie einer Verkleidung oder einer Vegetationsdecke (18) ermöglichen.

2. Vorrichtung (2) nach Anspruch 1, wobei mindestens ein freier Teil (4.1.1) der Vorderseite (4.1) der Hülle (4) einen vertikalen Streifen bildet, der sich über mindestens 90% der Höhe der Hauptfläche (4.1) erstreckt.

3. Vorrichtung (2) nach einem der Ansprüche 1 und 2, wobei mindestens eine Photovoltaikanlage (14) auf einer Oberseite (4.5) der Hülle (4) installiert ist, wobei diese Oberseite mindestens einen von Photovoltaikanlagen (4.5.1) freien Teil umfasst und mit Befestigungsmitteln (12) versehen ist, die die Anbringung einer Abdeckung wie einer Verkleidung oder einer Vegetationsdecke (18) ermöglichen.

4. Vorrichtung (2) nach Anspruch 2 und 3, wobei der mindestens eine freie Abschnitt (4.5.1) der Oberseite (4.5) der Hülle (4) einen Streifen bildet, der an die Seitenfläche (4.3) angrenzt und mit dem mindestens einen vertikalen Streifen (4.1.1) auf der Vorderseite (4.1) verbunden ist.

5. Vorrichtung (2) nach einem der Ansprüche 1 bis 4, wobei mindestens eine Seitenfläche einen Bereich umfasst, der keine Zugangstüren aufweist und mit Befestigungsmitteln versehen ist, die das Anbringen einer Abdeckung wie einer Verkleidung oder einer Vegetationsdecke ermöglichen.

6. Vorrichtung (2) nach einem der Ansprüche 1 bis 5, wobei die Befestigungsmittel (12), die die Anbringung der Abdeckung(en) (18) ermöglichen, Schraubmittel umfassen, die an der Vorderseite (4.1) und/oder ggf. an der Oberseite (4.5) angebracht sind.

7. Vorrichtung (2) nach einem der Ansprüche 1 bis 6, wobei an den Befestigungsmitteln (12) der Abdeckung(en) (18) auf dem mindestens einen freien Abschnitt (4.1.1, 4.5.1) der Vorderseite (4.1) und/oder ggf. der Oberseite (4.5) und der mindestens einen Seitenfläche ein Gitter (16) angebracht ist.

8. Vorrichtung (2) nach einem der Ansprüche 1 bis 7, wobei die einzelnen Fächer (6) miteinander verbundene Module (10) bilden.

9. Vorrichtung (2) nach Anspruch 8, wobei mindestens eines (10) der Module (10, 10') eine Vielzahl von übereinanderliegenden Fächern (6) umfasst.

10. Vorrichtung (2) nach Anspruch 9, wobei mindestens ein anderes (10') der Module (10, 10') ein einziges größeres Fach (6') umfasst, das der Vielzahl von übereinanderliegenden Fächern (6) entspricht.

## Claims

1. A device (2) for storing portable personal transportation vehicles, comprising:
- an envelope (4) forming a plurality of individual compartments (6) for storing said portable personal transportation vehicles, each compartment being equipped with an access door (8) capable of being selectively locked and unlocked;
- an electrical circuit (14, 26) for recharging the portable personal transportation vehicles;
**characterized in that**
the access doors (8) of the plurality of individual compartments (6) are arranged on a front face (4.1) and at least one side face (4.3) of the envelope (4) in such a way as to keep at least one portion (4.1.1) of said front face (4.1.1), adjacent to the side face (4.3), free of access doors and provided with fastening means (12) allowing the attachment of a covering such as a cladding or a vegetation cover (18).

2. Device (2) according to claim 1, wherein at least one free portion (4.1.1) of the front face (4.1) of the envelope (4) forms a vertical strip extending over at least 90% of the height of the main face (4.1).

3. Device (2) according to any of claims 1 and 2, wherein at least one photovoltaic panel (14) is installed on an upper face (4.5) of the envelope (4), said upper face comprising at least one portion free of photovoltaic panels (4.5.1) and provided with fastening means (12) allowing the attachment of a covering such as a cladding or a vegetation cover (18).

4. Device (2) according to claims 2 and 3, wherein the at least one free portion (4.5.1) of the upper face (4.5) of the envelope (4) forms a strip adjacent to the side face (4.3) and aligned with the at least one vertical strip (4.1.1) on the front face (4.1).

5. Device (2) according to one of claims 1 - 4, wherein at least one side face comprises a portion free of access doors and provided with fastening means allowing the attachment of a covering such as a cladding or a vegetation cover.

6. Device (2) according to one of claims 1 - 5, wherein the fastening means (12) allowing the attachment of the covering(s) (18) include screwing means attached to the front face (4.1) and/or, if necessary, to the upper face (4.5).

7. Device (2) according to one of claims 1 - 6, wherein a grid (16) is attached to the fastening means (12) of the covering(s) (18) on the at least one free portion (4.1.1, 4.5.1) of the front face (4.1) and/or, if necessary, of the upper face (4.5) and of the at least one side face.

8. Device (2) according to one of claims 1 - 7, wherein the individual compartments (6) form modules (10) connected to one another.

9. Device (2) according to claim 8, wherein at least one (10) of the modules (10, 10') comprises a plurality of superimposed compartments (6).

10. Device (2) according to claim 9, wherein at least one other (10') of the modules (10, 10') comprises a single larger compartment (6') corresponding to the plurality of superimposed compartments (6).
